# EUROPÄISCHE PATENTANMELDUNG

(11) **EP 4 186 731 A1**
(43) Veröffentlichungstag der Anmeldung: **31.05.2023**
(21) Anmeldenummer: 22209824.6
(22) Anmeldetag: 28.11.2022
(51) Int. Cl.: B60K 37/06, H01H 13/22, H01H 13/83

(54) **BEDIENEINHEIT**

(30) Priorität: 29.11.2021 DE 102021005902
(71) Anmelder: Silcos GmbH, 72770 Reutlingen (DE)
(72) Erfinder: Fuchs, Manfred, 72649 Wolfschlugen (DE)
(74) Vertreter: Habermann, Hruschka & Schnabel

(57) **Zusammenfassung**

Die vorliegende Erfindung betrifft eine Bedieneinheit mit zumindest einem Tastelement (5), vorzugsweise für den Fahrzeuginnenbereich, bestehend aus einem flexiblen Gehäuse und einem in dem Gehäuse integrierten flexiblen Lichtleiter (7). Des Weiteren betrifft die Erfindung die Verwendung der Bedieneinheit und ein entsprechendes Herstellungsverfahren.

## Beschreibung

Die Erfindung betrifft eine Bedieneinheit mit zumindest einem Tastelement für beliebige Eingabesysteme, deren Verwendung im Fahrzeuginnenbereich sowie ein entsprechendes Herstellungsverfahren.

Beleuchtbare Eingabeelemente, wie Schalter, sind in den unterschiedlichsten Ausgestaltungen und Anwendungen bekannt. Im Fahrzeuginnenbereich sind mehrere Schalt- und Tastelemente vorgesehen, die mit Dekorelementen, wie beispielsweise einer entsprechenden Beschriftung, und auch mit einer Hintergrundbeleuchtung versehen sind. Neben einer hohen Wertigkeit und Abriebfestigkeit sollen derartige Eingabeelemente gerade im Fahrzeuginnenbereich ein sehr geringes Gewicht aufweisen. Auch sind flächige, flexible Silikonkörper bekannt, die für eine homogene Auskopplung von Licht, das in diesen in der Regel über LEDs eingeleitet wird, ausgelegt sind und insbesondere im Dekorbereich Anwendung finden.

Eine Bedieneinheit nach dem Oberbegriff des Anspruchs 1 ist beispielsweise aus der DE 10 2007 059 698 A1 und der DE 10 2007 003 271 A12 bekannt. Die DE 44 24 496 A1 lehrt allgemein, eine Eingabeeinheit mit einem Rahmen vollständig in ein Kunststoffmaterial und damit staub- und flüssigkeitsdicht zu vergießen.

Die vorliegende Erfindung richtet sich an derartige Tast- und Schaltelemente vorzugsweise für den Fahrzeuginnenbereich und stellt sich die Aufgabe, eine diesbezügliche Bedieneinheit entsprechend weiterzubilden.

Gelöst wird diese Aufgabe mit einer Bedieneinheit mit den Merkmalen des Anspruchs 1 und mit einem entsprechenden Herstellungsverfahren mit den Merkmalen nach Anspruch 12. Des Weiteren bezieht sich die, die Aufgabe lösende Erfindung auf die Verwendung einer solchen Bedieneinheit als ein Tastschaltelement nach Anspruch 13.

In einem ersten Aspekt betrifft die Erfindung folglich eine Bedieneinheit mit zumindest einem Tastelement, bestehend aus einem Gehäuse und einem in dem Gehäuse integrierten Lichtleiter,
wobei das Gehäuse eine Silikonabdeckung und eine Trägerplatte aufweist,
wobei der Lichtleiter durch die Silikonabdeckung und die Trägerplatte vollständig eingefasst ist,
und wobei eine Folie mit dem zumindest einem Tastelement zwischen dem Lichtleiter und der Trägerplatte angeordnet ist.

Die Folie kann dabei auf einer dünnen Leiterplatte bzw. Platine angeordnet werden, die entweder aus einem starren oder vorzugsweise aus einem flexiblen Material hergestellt ist.

Die Leiterplatte kann zumindest eine LED aufweisen, vorzugsweise am seitlichen Rand davon, so dass eine seitliche Einkopplung von Licht in den flächig und sehr flach ausgebildeten Lichtleiter verwirklicht wird.

Um eine bessere Lichtauskopplung durch die Silikonabdeckung nach oben zu ermöglichen, ist es gemäß der Erfindung vorgesehen, dass entweder die Folie oder die Leiterplatte auf der zum Lichtleiter zugewandten Seite reflektierend ausgebildet ist. Die Folie kann bereits selbst aus einem reflektierenden, beispielsweise weißen Material, wie Silikon, hergestellt sein; die Oberseite der Platine kann weiß beschichtet sein.

Da in einer bevorzugten Ausführungsform alle Komponenten der Bedieneinheit jeweils aus einem flexiblen Material hergestellt sind, verhält sich das Gehäuse der Bedieneinheit insgesamt flexibel. Es besteht keine Gefahr von Splittern, was den Einsatz derartiger Bedieneinheiten auf Abdeckungen von Airbageinrichtungen oder in der Nähe davon ermöglicht, wie insbesondere als Lenkradschalter.

Als Tastelemente kommen bevorzugt Metallschnappscheiben zum Einsatz, die sich leicht in die Folie integrieren, d.h. einvulkanisieren lassen, und mit einer entsprechenden Elektronik auf der Leiterplatte zusammenwirken. Derartige Metallschnappscheiben ermöglichen aufgrund ihres funktionellen Aufbaus allgemein eine taktile Rückmeldung an den Nutzer.

Da der Lichtleiter und die Silikonabdeckung ebenfalls flexibel ausgestaltet sind, kann die taktil wahrnehmbare Reaktion der Schnappscheiben bei Betätigung der Tastelemente durch den Lichtleiter und die Silikonabdeckung nach außen übertragen werden. Gleichzeitig gestattet der nachgiebige Lichtleiter stets eine Beleuchtung der Bedieneinheit.

In einer Ausführungsform der Bedieneinheit gemäß der Erfindung kann die Trägerplatte aus dem gleichen Material wie ein Trägerelement für die Bedieneinheit hergestellt sein, auf dem diese angebracht werden soll, wobei das Material ausgelegt ist, um zwischen dem Trägerelement und der Trägerplatte einen Stoffschluss auszubilden, beispielsweise im Wege eines Verschweißens oder Verklebens, was eine einfache Montage der Bedieneinheit, insbesondere als eine vormontierte, eigenständige Einheit, realisiert.

Gemäß der Erfindung weist das Gehäuse des Weiteren einen Rahmen auf, der in sich umfänglich geschlossen und mit der Silikonabdeckung als ein 2-Komponentenbauteil herstellbar ist, wobei der Rahmen hierbei aus dem gleichen Material wie die Trägerplatte hergestellt und ausgelegt ist, um zwischen dem Rahmen und der Trägerplatte einen Stoffschluss auszubilden, beispielsweise verschweißt, heißverstemmt oder verklebt zu werden.

Der Lichtleiter ist als ein flächiger, flacher Silikonkörper ausgebildet, der aus einem hochtransparenten Silikon hergestellt ist, wodurch eine optimale Lichtleitung realisiert wird. Der Lichtleiter lässt sich daher unbegrenzt in seiner Geometrie an die notwendigen Dimensionen der Bedieneinheit anpassen und bildet zusammen mit der Silikonabdeckung und der Trägerplatte ein flexibles, splitterfreies Gehäuse, welches insgesamt ein sehr geringes Gewicht besitzt.

Innerhalb des Gehäuses liegt der Lichtleiter zwischen der Silikonabdeckung und der Folie oder einer auf dieser Folie angebrachten Abdeckfolie vollständig lose ein, d.h. zwischen diesen Komponenten existiert jeweils ein kleiner Luftspalt ohne irgendeine stoffschlüssige Verbindung. Der flächige Lichtleiter, die Folie, ggfs. die Abdeckfolie und die Leiterplatte sind dabei zwischen der Silikonabdeckung und der Trägerplatte vollständig staub- und wasserdicht aufgenommen.

Um eine homogene Lichtverteilung bzw. Ausleuchtung des Lichtleiters nach oben zur Silikonabdeckung zu realisieren, kann dessen Unterseite Mittel aufweisen, die ausgelegt sind, über eine Lichtbrechung, -reflektion und/oder -bündelung eine solche homogene, d.h. flächige Lichtauskopplung zu ermöglichen, wie beispielsweise ein bedrucktes Punktmuster oder eine mittels Laserabtrag eingebrachte Strukturierung, die beide vorab insbesondere in Abhängigkeit der Stelle der Lichteinkopplung durch den Anschlussleiter entsprechend berechnet und ausgestaltet werden.

In einer bevorzugten Ausführungsform der Bedieneinheit gemäß der Erfindung ist der flächige Lichtleiter integral mit einem Anschlussleiter aus einem hochtransparenten Flüssigsilikon hergestellt. Vorzugsweise ist der Anschlussleiter im Verhältnis zum Lichtleiter dabei dezentral angeordnet, idealerweise lateral zu diesem, um so auch dezentral durch die Trägerplatte nach außen bzw. unten geführt werden zu können. Auf diese Weise kann sichergestellt werden, dass der Anschlussleiter z.B. der Auslöserichtung eines Airbags nicht im Weg steht.

An seinem distalen Ende kann der ebenfalls flexible Anschlussleiter ein optisches Kupplungselement aufweisen, das für den Anschluss an eine LED ausgebildet ist, die dann außerhalb der Bedieneinheit, beispielsweise im Bereich eines Trägerelements angeordnet ist. Die Verwendung eines lichtleitenden Kupplungselements rundet die Bedieneinheit als eigenständige, vormontierte Einheit ab, die einfach montiert und ggfs. demontiert bzw. ausgetauscht werden kann.

Die nach oben abschließende Silikonabdeckung besteht vorzugsweise aus einem weißen, halbtransparenten Silikon, das materialbedingt in der Lage ist, sowohl auf der Vorder- als auch Rückseite mit bekannten Maßnahmen bedruckt, lackiert, metallisiert (hochglanz oder matt) und/oder mittels Laserbearbeitung strukturiert zu werden.

Auf diese Weise lassen sich alle möglichen Oberflächen, Dekorelemente, Beschriftungen, Embleme, Symbole und dergleichen realisieren, wobei über entsprechende Vertiefungen in der Oberfläche auch eine gewünschte Haptik umgesetzt werden kann. Die so in bzw. auf der Silikonabdeckung ausgestalteten Darstellungsformen können bereits ohne Hintergrundbeleuchtung sichtbar und bei Bedarf beleuchtbar oder sogar nur mit aktiver Hintergrundbeleuchtung ("Verschwindeeffekt") beleuchtbar sein. Auch lässt sich durch eine entsprechende Strukturierung auf der Rückseite der Silikonabdeckung eine optische Tiefenwirkung (sogenannter "Crystal Look") erzielen. Der Dekorationsvielfalt und damit dem optischen Erscheinungsbild der Oberfläche der Vorrichtung sind somit keine Grenzen gesetzt.

In einem weiteren Aspekt betrifft die vorliegende Erfindung ein Verfahren zur Herstellung einer Bedieneinheit mit zumindest einem Tastelement, die Schritte aufweisend
- Ausbilden einer flexiblen Silikonabdeckung,
- Ausbilden eines Rahmens,
- Ausbilden eines 2-Komponentenbauteils bestehend aus der Silikonabdeckung und dem Rahmen,
- Ausbilden einer Trägerplatte,
- Ausbilden eines Lichtleiters aus einem flexiblen Material,
- Ausbilden einer Folie mit zumindest einem darin integrierten Tastelement,
- Anbringen der Folie auf einer Leiterplatte,
- Anordnen der Leiterplatte mit der Folie zwischen dem Lichtleiter und der Trägerplatte, und
- Ausbilden einer festen Verbindung zwischen dem Rahmen des 2-Komponentenbauteils und der Trägerplatte mittels Formschluss, Kraftschluss oder Stoffschluss.

Die Silikonabdeckung kann aus einem Flüssigsilikon oder aus einem hochtemperaturvernetzbaren festen Silikonkautschuk hergestellt werden.

Bei der Verwendung von Flüssigsilikon werden die flüssigen 2-Komponenten-Silikonkautschuke mit Hilfe von bekannten Mehrkomponenten-Dosier- und Mischanlagen aus den Originalgebinden im gleichen Verhältnis in die beheizten Formen eines Spritzgießautomaten eingespritzt, wo der so additionsvernetzte Silikonkautschuk dann bei 140° bis 200°C innerhalb weniger Sekunden vulkanisiert.

Bei Verwendung von festem Silikonkautschuk als Basis werden Vernetzungsmittel und Additive mittels bekannter Walzwerke eingemischt und definierte, dosierte Mengen des so hochvernetzten Silikonkautschuks in Formwerkzeuge eingelegt und unter einem bestimmten Druck und in einer bestimmten Zeit bei Temperaturen ebenfalls zwischen 140° und 200°C ausgehärtet.

In beiden Fällen wird eine flexible, transparente Abdeckung als Oberteil für die Bedieneinheit erhalten.

Die Trägerplatte wird gemäß der Erfindung aus dem gleichen Material wie der Rahmen des 2-Komponentenbauteils ausgebildet, nämlich vorzugsweise aus Polycarbonat, ABS mit Polycarbonat oder Polyamiden, so dass es gemäß der Erfindung möglich wird, den Rahmen mit der Trägerplatte zu verschweißen, heißzuverstemmen oder zu verkleben.

Die Folie mit den darin integrierten Metallschnappscheiben kann auf der Leiterplatte verklebt werden, wobei auf dieser noch eine schützende Abdeckfolie angebracht sein kann. Die Trägerplatte selbst kann aus einem Kunststoff oder ebenso aus Silikon hergestellt sein.

Die Trägerplatte kann aus dem gleichen Material wie das Trägerelement für die Bedieneinheit ausgebildet werden, wie vorzugweise aus einem thermoplastischen Poly-Olefin (TPO) oder Elastomer (TPE), um miteinander verschweißt oder verklebt zu werden.

Das Verfahren gemäß der Erfindung kann vor finaler Herstellung der Bedieneinheit noch die weiteren Schritte aufweisen, bei denen die Leiterplatte auf ihrer dem Lichtleiter zugewandten Seite mit einer reflektierenden Beschichtung versehen wird, bei denen die Silikonabdeckung auf ihrer Vorder- und/oder Rückseite mit einer Lackierung, einer Metallisierung und/oder mittels einer Laserbearbeitung hergestellten Strukturierung versehen wird und/oder bei denen der Lichtleiter auf seiner Unterseite mit Mitteln für eine gleichmäßige Lichtauskopplung versehen wird.

Die so vorzugsweise als eigenständige Einheit realisierbare erfindungsgemäße Bedieneinheit zeichnet sich durch ein äußerst geringes Gewicht und eine Temperaturbeständigkeit in einem Bereich von -40° bis 105° C aus. Diese ist wasser- und staubdicht und zeigt bei Beschädigung keine Splittergefahr. Insgesamt lässt sich durch die einzelnen dünnen Schichten ein extrem flacher Aufbau realisieren, wodurch auch bei mehreren Tastelementen eine sehr kompakte Schalteinheit verwirklicht werden kann, die wenig Bauraum, bspw. im Cockpitbereich eines Fahrzeugs einnimmt.

Die Möglichkeit einer direkten stoffschlüssigen Verbindung zwischen der Trägerplatte und einem beliebigen Trägerelement aus einem gleichen Material, wie TPO oder TPE, realisiert auf einfache Weise eine verliersichere Verbindung.

Die Oberfläche der Bedieneinheit ist mittels der oben erwähnten Maßnahmen frei gestaltbar; es lassen sich Symbole, Embleme und dergleichen sichtbar oder erst mittels aktivierter Beleuchtung darstellen.

Weitere Vorteile und Merkmale der erfindungsgemäßen Bedieneinheit ergeben sich aus der Beschreibung des anhand der beiliegenden Zeichnungen dargestellten Ausführungsbeispiels.

Es zeigen
- Fig. 1: einen Querschnitt durch eine Bedieneinheit gemäß dem Stand der Technik;
- Fig. 2a: eine Explosionsdarstellung durch diese Bedieneinheit von oben;
- Fig. 2b: eine Explosionsdarstellung durch diese Bedieneinheit von unten;
- Fig. 3: einen Querschnitt durch eine Bedieneinheit gemäß der Erfindung;
- Fig. 4a: eine Explosionsdarstellung durch diese Bedieneinheit von oben; und
- Fig. 4b: eine Explosionsdarstellung durch diese Bedieneinheit von unten.

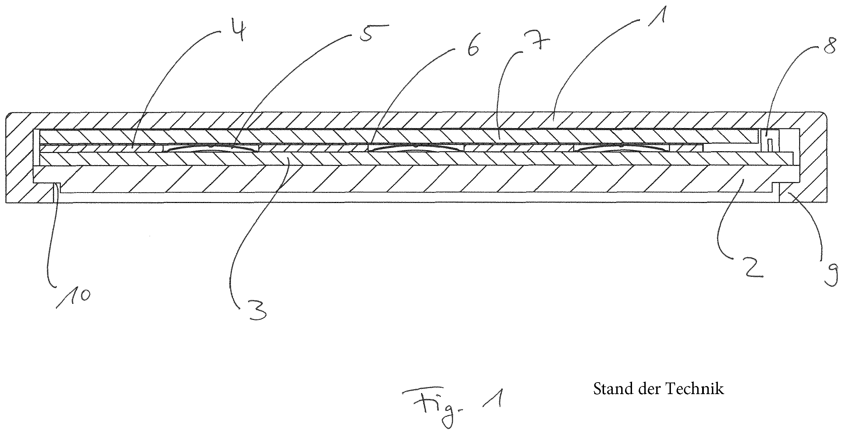

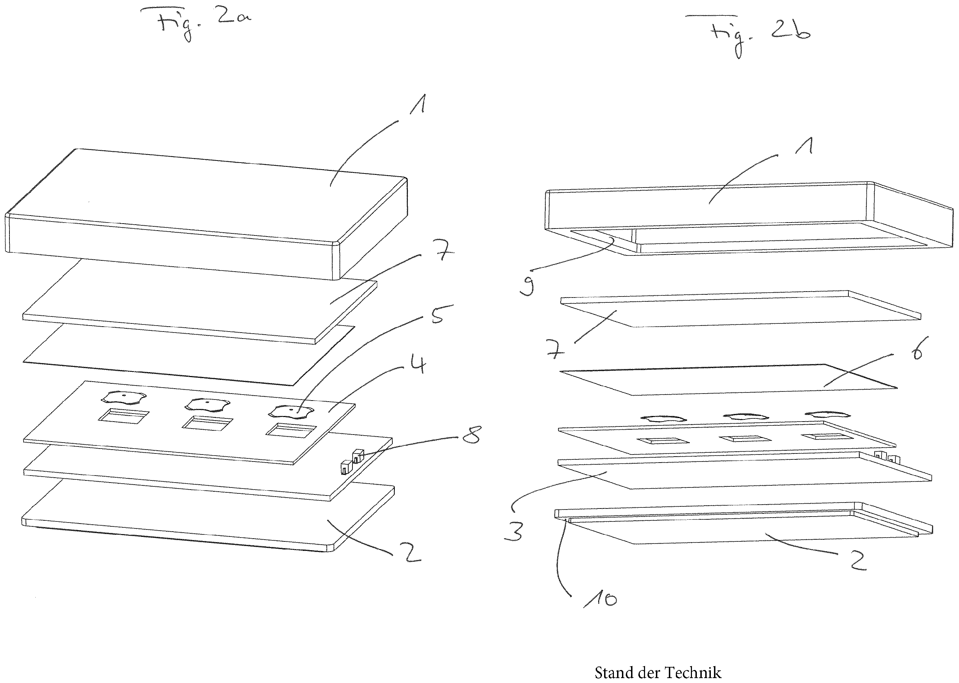

Die Figuren 1, 2a und 2b zeigen beispielhaft eine aus dem Stand der Technik bekannte Bedieneinheit, wobei die gezeigten Dimensionen zu Veranschaulichungszwecken größer dargestellt sind.

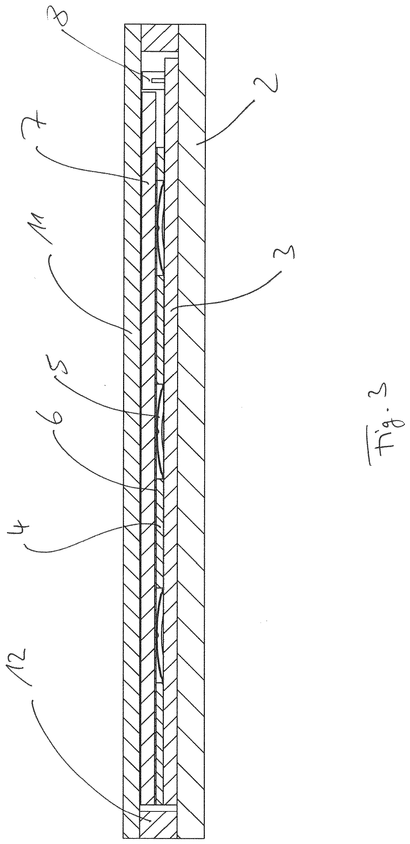

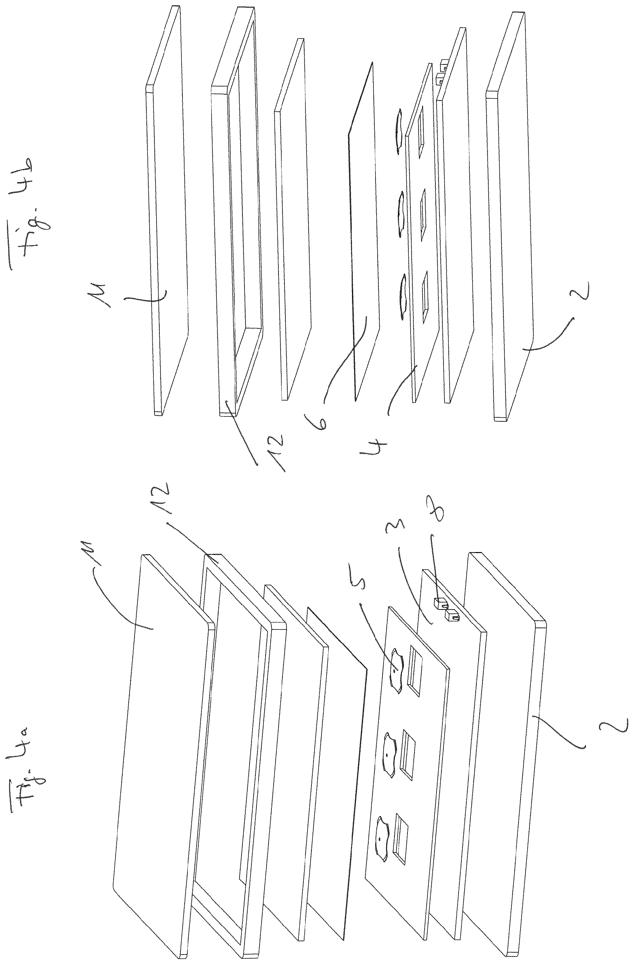

In den Figuren 3, 4a und 4b ist eine erfindungsgemäße Bedieneinheit gezeigt, wobei Bauteile, die im Wesentlichen identisch zu denjenigen der gezeigten Ausführungsform des Standes der Technik sind, mit gleichen Bezugszeichen versehen sind.

Tatsächlich ist es gemäß der Erfindung möglich, durch einen Schichtaufbau aus mehreren Komponenten, die sich material- und herstellungsbedingt sehr dünn herstellen lassen, eine extrem flache Bedieneinheit zu verwirklichen.

Diese Bedieneinheit ist im gezeigten Beispiel rechteckförmig, kann im Prinzip jedoch jede beliebige Gestalt und Form aufweisen und sogar gewölbt sein.

Die Bedieneinheit besteht aus einer oberen flexiblen Silikonabdeckung 1 und einer unteren Trägerplatte 2, die ebenfalls flexibel, etwas weniger flexibel oder je nach Verwendungszweck und gewünschter Haptik der Bedieneinheit sogar starr ausgebildet sein kann.

In dem durch diese beiden Bauteile gebildeten Gehäuse ist eine Schalteinheit aufgenommen, die aus einer Leiterplatte 3, einer auf dieser angebrachten, d.h. verklebten Folie 4, in die drei Metallschnappscheiben 5 integriert sind, und einer Abdeckfolie 6 besteht.

Zwischen der vorzugsweise reflektierend ausgebildeten Abdeckfolie 6 und der Silikonabdeckung 1 liegt ein flächiger Lichtleiter 7 lose ein, d.h. es besteht zwischen dem Lichtleiter 7 und diesen beiden Komponenten keine direkte, stoffschlüssige Verbindung. Alternativ kann auch die Folie 4 reflektierend und die Abdeckfolie 6 transparent ausgebildet sein.

Der Lichtleiter 7, der aus einem hochtransparenten Flüssigsilikon hergestellt ist, wird mittels zweier LEDs 8, die auf der Leiterplatte 3 seitlich angeordnet sind, seitlich mit Licht gespeist. Da der Lichtleiter 7 auf seiner Unterseite (nicht gezeigte) Mittel für eine gleichmäßige Lichtverteilung aufweist, kann Licht nach oben durch die Silikonabdeckung 1 homogen ausgekoppelt werden.

Sowohl der flächige Lichtleiter 7 als auch die Leiterplatte 3 mit Folien 4, 6, den Metallschnappscheiben 5 und den LEDs 8 werden dabei vollständig staub- und wasserdicht zwischen der Silikonabdeckung 1 und der Trägerplatte 2 bzw. dem Trägerelement aufgenommen.

Während bei der in den Figuren 1 bis 2b gezeigten Ausführungsform gemäß dem Stand der Technik die Bedieneinheit vervollständigt wird, indem ein mit Hinterschnitt versehener Rand 9 der Silikonabdeckung 1 einen nach unten weisenden, nach oben zurückversetzten Absatz 10 der Trägerplatte 2 umlaufend umgreift, wobei der Rand 9 dann anschließend mit einem nicht dargestellten Untergrund bzw. Trägerelement für die Bedieneinheit mit Silikon verklebt werden kann, wird bei der erfindungsgemäßen Bedieneinheit das Gehäuse darüber hinaus durch eine obere Silikonabdeckung 11 und einen umlaufenden, rechteckförmigen Rahmen 12 gebildet, wobei zwischen diesen Komponenten eine 2-Komponentenverbindung ausgebildet wird.

Bevorzugt besteht der Rahmen 12 aus dem gleichen Material wie die Trägerplatte 2, und wird mit dieser verklebt, heißverstemmt oder verschweißt.

Des Weiteren kann die Trägerplatte 2 bevorzugt aus dem gleichen Material wie ein Trägerelement für die Bedieneinheit bestehen, um zwischen diesen einen Stoffschluss zu ermöglichen.

## Patentansprüche

1. Bedieneinheit mit zumindest einem Tastelement (5), bestehend aus einem Gehäuse und einem in dem Gehäuse integrierten Lichtleiter (7),
wobei das Gehäuse eine Silikonabdeckung (1,11) und eine Trägerplatte (2) aufweist,
wobei der Lichtleiter (7) durch die Silikonabdeckung (1,11) und die Trägerplatte (2) vollständig eingefasst ist,
und wobei eine Folie (4) mit dem zumindest einem Tastelement (5) zwischen dem Lichtleiter (7) und der Trägerplatte (2) angeordnet ist,
**dadurch gekennzeichnet, dass**
das Gehäuse des Weiteren einen Rahmen (12) aufweist, der mit der Silikonabdeckung (11) als ein 2-Komponentenbauteil hergestellt ist, wobei der Rahmen (12) aus dem gleichen Material wie die Trägerplatte (2) hergestellt ist, und wobei das Material ausgelegt ist, um zwischen dem Rahmen (12) und der Trägerplatte (2) einen Stoffschluss auszubilden.

2. Bedieneinheit nach Anspruch 1, bei der die Folie (4) auf einer Leiterplatte (3) angeordnet ist.

3. Bedieneinheit nach Anspruch 1 oder 2, bei der eine Abdeckfolie (6) auf der Folie (4) angebracht ist, und bei der die Folie (4), die Abdeckfolie (6) oder die Leiterplatte (3) auf der zum Lichtleiter (7) zugewandten Seite reflektierend ausgebildet ist.

4. Bedieneinheit nach Anspruch 3, bei der die Leiterplatte (3) zumindest eine LED (8) für eine Lichteinkopplung in den Lichtleiter (7) aufweist.

5. Bedieneinheit nach einem der Ansprüche 1 bis 4, bei der die Trägerplatte (2) aus einem solchen Material hergestellt ist, dass zwischen einem Trägerelement für die Bedieneinheit und der Trägerplatte (2) ein Stoffschluss ausgebildet werden kann, insbesondere bei der die Trägerplatte (2) so ausgestaltet ist, dass diese mit dem Trägerelement verschweißt oder verklebt werden kann.

6. Bedieneinheit nach Anspruch 1, bei der der Rahmen (12) mit der Trägerplatte (2) verschweißt, heißverstemmt oder verklebt ist.

7. Bedieneinheit nach einem der Ansprüche 1 bis 6, bei der die Silikonabdeckung (1,11) auf ihrer Vorder- und/oder Rückseite lackiert, metallisiert und/oder mittels Laserbearbeitung strukturiert ist.

8. Bedieneinheit nach einem der Ansprüche 1 bis 7, bei der der Lichtleiter (7) auf seiner Unterseite Mittel für eine gleichmäßige Lichtauskopplung aufweist.

9. Bedieneinheit nach Anspruch 1 oder 2, bei der der Lichtleiter (7) zwischen der Silikonabdeckung (1,11) und der Folie (4) lose einliegt.

10. Bedieneinheit nach einem der Ansprüche 3 bis 8, bei der der Lichtleiter (7) zwischen der Silikonabdeckung (1,11) und der Abdeckfolie (6) lose einliegt.

11. Bedieneinheit nach einem der Ansprüche 1 bis 10, bei der diese als vormontierte Einheit an einem Trägerelement befestigbar ist.

12. Verwendung einer Bedieneinheit nach zumindest einem der Ansprüche 1 bis 11 als ein Tastschaltelement für den Fahrzeuginnenbereich, insbesondere als ein Lenkradschaltelement.

13. Verfahren zur Herstellung einer Bedieneinheit mit zumindest einem Tastelement (5), die Schritte aufweisend
- Ausbilden einer flexiblen Silikonabdeckung (1),
- Ausbilden eines Rahmens (12),
- Ausbilden eines 2-Komponentenbauteils bestehend aus der Silikonabdeckung (11) und dem Rahmen (12),
- Ausbilden einer Trägerplatte (2),
- Ausbilden eines Lichtleiters (7) aus einem flexiblen Material,
- Ausbilden einer Folie (4) mit zumindest einem darin integrierten Tastelement (5),
- Anbringen der Folie (4) auf einer Leiterplatte (3),
- Anordnen der Leiterplatte (3) mit der Folie (4) zwischen dem Lichtleiter (7) und der Trägerplatte (2), und
- Ausbilden einer festen Verbindung zwischen dem Rahmen des 2-Komponentenbauteils und der Trägerplatte (2) mittels Formschluss, Kraftschluss oder Stoffschluss, wobei die Trägerplatte (2) aus dem gleichen Material wie der Rahmen (12) des 2-Komponentenbauteils ausgebildet und mit diesem verschweißt, heißverstemmt oder verklebt wird.

14. Verfahren nach Anspruch 13, weiter aufweisend den Schritt:
- Anbringen einer Abdeckfolie (6) auf der Folie (4).

15. Verfahren nach Anspruch 13 oder 14, bei dem die Leiterplatte (3) auf ihrer dem Lichtleiter (7) zugewandten Seite mit einer reflektierenden Beschichtung versehen wird, bei dem die Silikonabdeckung (1,11) auf ihrer Vorder- und/oder Rückseite mit einer Lackierung, einer Metallisierung und/oder mittels einer Laserbearbeitung hergestellten Strukturierung versehen wird, und/oder bei dem der Lichtleiter (7) auf seiner Unterseite mit Mitteln für eine gleichmäßige Lichtauskopplung versehen wird.
